# EUROPEAN PATENT SPECIFICATION

(11) **EP 0 943 275 B1**
(45) Date of publication and mention of the grant of the patent: **24.11.2004**
(21) Application number: 99650020.3
(22) Date of filing: 11.03.1999
(51) Int. Cl.: A47J 37/04, A47J 27/14

(54) **"A continuous cooking system"**
Kontinuierliches Kochsystem
Système de cuisson continue

(30) Priority: 12.03.1998 IE 980182
(43) Date of publication of application: 22.09.1999
(73) Proprietor: Jackman, Nicholas Anthony, Castletroy, County Limerick (IE); O'TOOLE, Olivier, Ballysheedy, County Limerick (IE); Queally, Peter, Kill, County Waterford (IE)
(72) Inventor: Jackman, Nicholas Anthony, Castletroy, County Limerick (IE); O'TOOLE, Olivier, Ballysheedy, County Limerick (IE); Queally, Peter, Kill, County Waterford (IE)
(74) Representative: Weldon, Michael James

(56) References cited:
- WO-A-85/05546
- WO-A-95/34220
- FR-A- 2 132 439

## Description

The invention relates to a continuous cooking system of the type having a conveyor which conveys the food products through a tunnel having tempering, cooking, and equilibrium zones. Such a system is described in Irish patent No. IE74240.

While such an arrangement is generally effective, there is a need to improve the efficiency of such systems, particularly when one bears in mind that the major cost of food production is for energy consumption rather than plant capital investment.

There is also a need to provide such a system which is multi-functional whereby it may be used with a simple pre-setting to cook a wide range of different food products such as poultry, beef, pork, bacon, bakery, and fish products. It is desirable that the range of functions include full dry cooking, full wet cooking, and a combination, wet/dry cooking arrangement.

Another object of the invention is that the food product core/surface temperature differential be reduced for more effective cooking.

A further object of the invention is to reduce the cooking cycle time for food products.

A still further object is to improve food product yields.

According to the invention, there is provided a continuous cooking system comprising:-
a conveyor, and drive means for moving the conveyor through a tunnel, the tunnel comprising:-
   a tempering zone through which air flows against the conveying direction in a contra flow, a cooking zone comprising an air heater and fan means for pumping hot air against food products and pumping used air rearwardly into the tempering zone and forwardly out of the cooking zone, and an equilibrium zone downstream of the cooking zone in which used air flows in the same direction as the conveying direction and is drawn out at an exhaust, characterised in that,
   the exhaust of the equilibrium zone is connected to an auxiliary air inlet of the tempering zone to feed back hot air to increase the contra flow flowrate and temperature in the tempering zone.

In one embodiment, the feedback flowrate is approximately equal to the contra flow flowrate directly from the cooking zone.

Preferably, the feedback temperature is in the range of 180° to 250°C.

In one embodiment, the cooking zone comprises means for internally feeding back used air into the air heater.

Preferably, the cooking zone comprises means for drawing inlet air via an upper vent in a cooking zone housing and via a primary inlet of the air heater.

In another embodiment, the cooking zone comprises upper and lower plenums above and below the conveyor belt, and a flow controller for regulating proportions of hot air to the plenums.

Preferably, the plenums comprise air-directing tubes arrranged in an offset configuration with respect to the conveying direction whereby cooking is not load-related.

In another embodiment, the system comprises means for injecting steam into the cooking zone for air-assisted steam flow against food products.

Preferably, the tempering and equilibrium zones each comprise means for injecting steam against hot air flow to cause turbulent air and steam admixture.

In another embodiment, the steam nozzles are directed downwardly beneath the conveyor and above a drip tray.

Preferably, the steam pressure is in the range 1.1 to 2.5 bar.

In another embodiment, the system further comprises a belt wash system in the tempering zone, the belt wash system comprising means for directing pressurised water at the belt at a roller in sweeping movements across the width of the belt.

Preferably, the cooking zone comprises means for adjusting vertical position of the plenums.

In one embodiment, the system comprises a fat removal system in at least one zone, said fat removal system comprising a drip tray having a weir drain and a hot water supply, whereby fat floats on the water and flows out the weir drain.

The invention will be more clearly understood from the following description of some embodiments thereof, given by way of example only with reference to the accompanying drawings in which:-
Fig. 1 is an overall side view of a cooking system of the invention;
Fig. 2 is an end view of the system;
Fig. 3 is a diagrammatic cross-sectional side view of the system;
Fig. 4 is a diagrammatic cross-sectional end view of a cooking zone of the system;
Fig. 5 is a diagrammatic cross-sectional side view of the cooking zone;
Fig. 6 is a plan view showing some plenum tubes;
Fig. 7 is a more detailed view showing operation of the plenum tubes;
Fig. 8 is a plot showing temperature gradients within the system;
Fig. 9 is a more detailed diagrammatic cross-sectional side view showing the tempering zone; and
Fig. 10 is a more detailed cross-sectional side view showing the equilibrium zone.

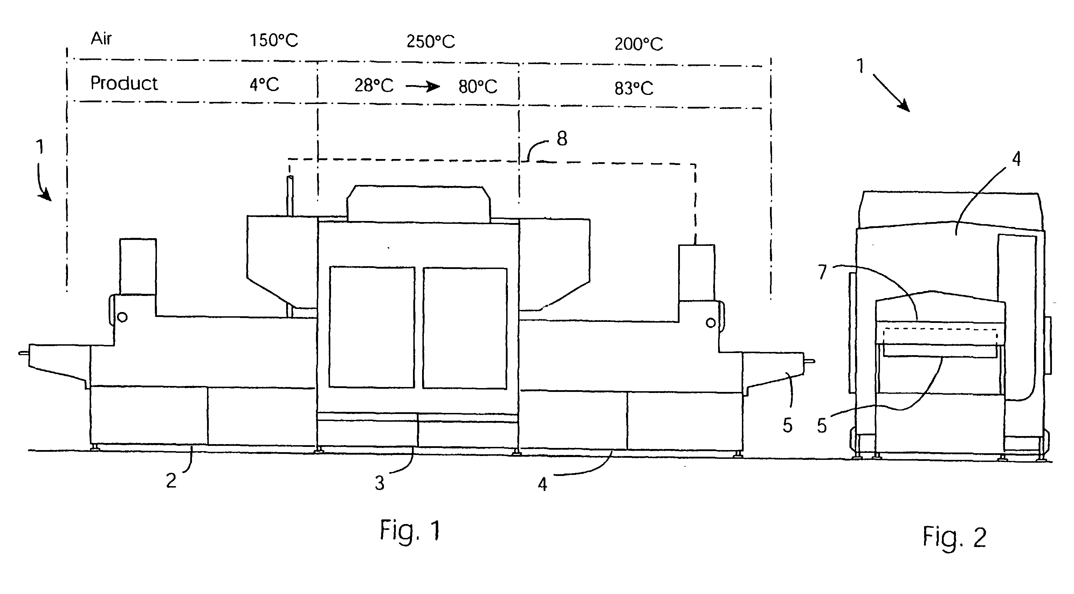

Referring to the drawings, there is shown a cooking system 1. The system 1 comprises a tempering zone 2, a cooking zone 3, and a equilibrium zone 4. A steel mesh conveyor 5 conveys food products through a tunnel which comprises these zones, the tunnel being indicated by the numeral 7 in Fig. 2. Fig. 1 also shows in diagrammatic form a feedback line 8 between the equilibrium and tempering zone.

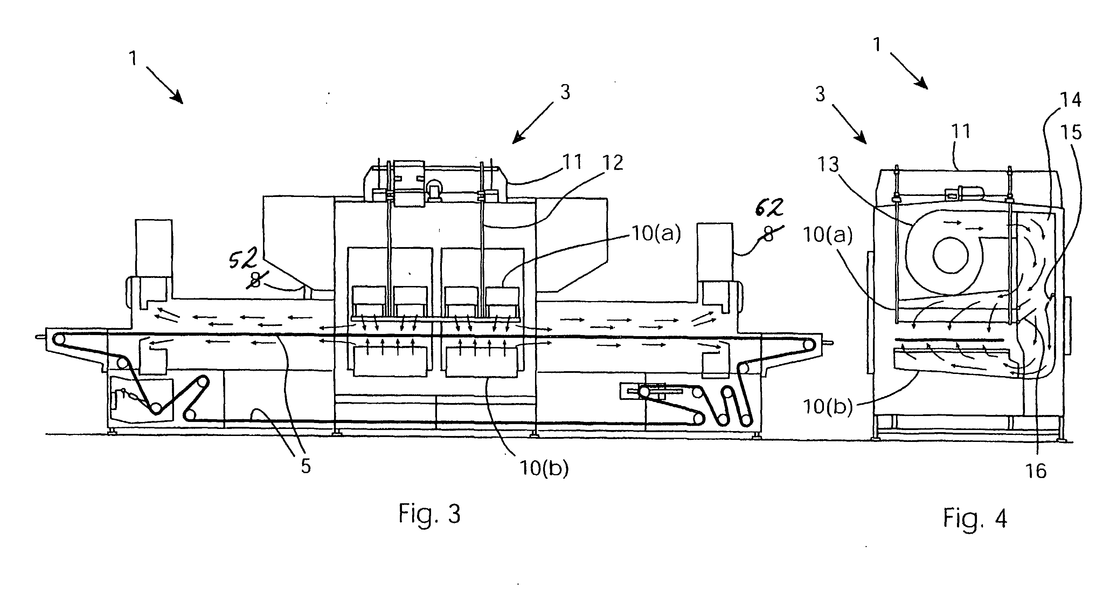

In more detail and referring to the remaining drawings, the cooking zone 3 comprises an upper plenum 10(a) and a lower plenum 10(b). The height of the plenums is adjusted by a mechanism 11 driven by a motor and controlling spindles 12 connected to the plenums 10(a) and 10(b). The cooking zone 3 also comprises a combustion chamber 13 which communicates with an outlet duct 14 which feeds hot air into the plenums 10(a) and 10(b) via a flow control regulator 15 on the outer side and 16 on the inner side. As shown in Fig. 4, the regulators 15 and 16 co-operate to vary the proportion of air between the upper and lower plenums 10(a) and 10(b).

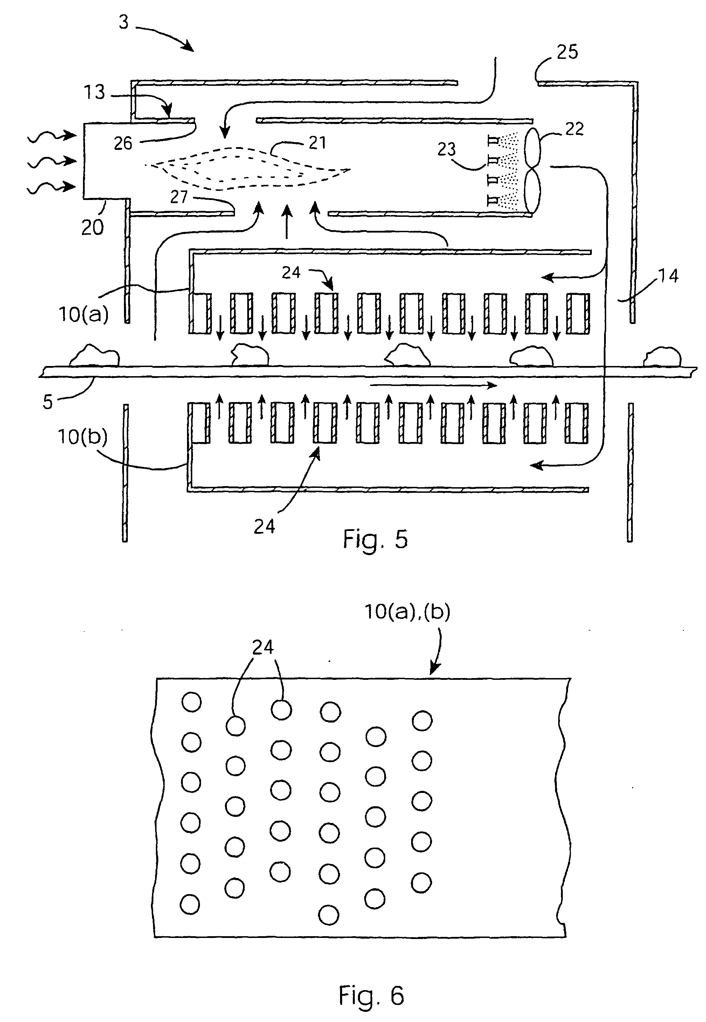

As shown in Fig. 5, the combustion chamber 13 comprises a burner 20 which draws combustion air to create a flame 21 within the chamber 13, which is cylindrically-shaped. The combustion chamber 31 comprises an upper aperture 26, through which air is drawn from a vent 25 in the upper casing of the cooking zone 3. The combustion chamber 20 also comprises an outlet fan 22 which drives air out into the duct 14 and into the plenums 10(a) and 10(b) as controlled by the regulators 15 and 16.. Steam nozzles 23 are mounted upstream of the fan 22. Operation of these is described in more detail below.

As shown in Figs. 5, 6, and 7, the plenums 10(a) and 10(b) comprise vertically-arranged tubes 24 which are mounted in an off-set configuration as shown particularly in Fig. 6 so that rows of three overlap in the conveying direction to provide load-independent cooking. This is a very important feature as cooking quality and settings are not affected by the load. This is particularly important in environments in which it is difficult to predict and control the load.

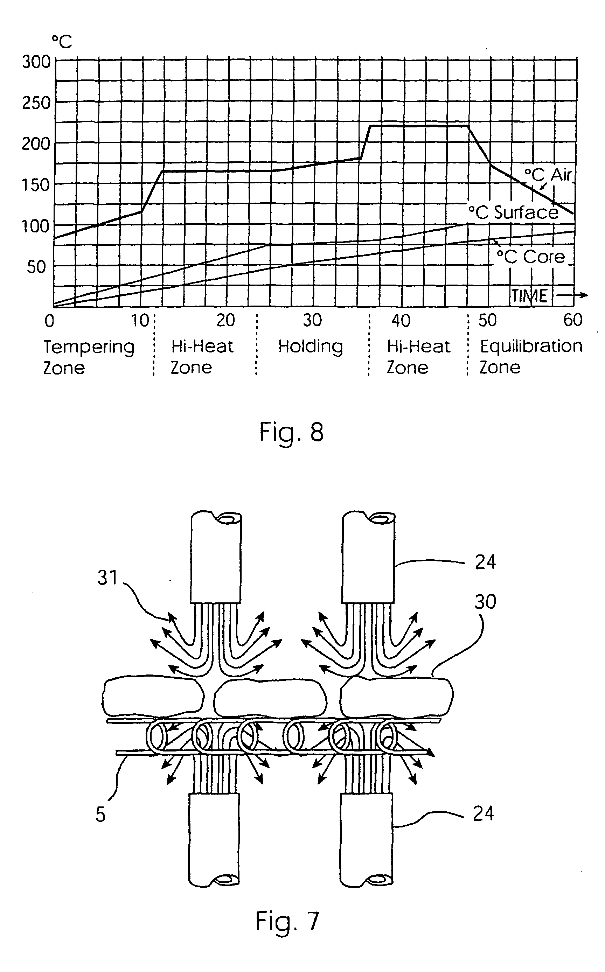

As shown in Fig. 7, the air is directed as high speed collimated streams 31 from the tubes 24 which impinge against the products 30 to break the boundary layer at the product surface to provide comprehensive cooking from the surface to the core of the product.

Fig. 1 shows typical temperature data for both the cooking air and the food product. The product temperature rises from 4°C in the tempering zone to ultimately 80°C in the cooking zone and subsequently to 83°C in the equilibrium zone. The respective air temperatures are 150°C, 250°C and 200°C. The food product temperature profile is a significant improvement over the prior art, in which the temperature at inlet to the cooking zone was generally lower.

Another set of data is shown in graphical form in Fig. 8, in an embodiment comprising two cooking zones separated by a holding stage. This diagram also shows the differential between product core and surface temperatures. It will be seen that the differential decreases significantly in the equilibrium zone by virtue of the air flow control within the system 1.

In more detail, air is directed as indicated by the arrows in Fig. 5 from the combustion chamber and into the upper and lower plenums 10(a) and 10(b). It is directed as high-speed collimated air streams against the food products. After it has served this purpose, it is referred to in this specification as "used" air which is fed back in various paths within the system 1. As shown by the arrows in Fig. 5, some of this air rises upwardly and into the cooking chamber 20 via an aperture 27. This increases efficiency within the cooking zone 3. Also, as shown by arrows of Fig. 3, air is directed out from the cooking zone 3 into the tempering zone 2 against the conveying direction and it is so referred to as a contra flow. Used air is also directed out of the cooking zone 3 and into the equilibrium zone 4 as a laminar flow, in the conveying direction.

Thus, it will be appreciated that the air is used initially for direct impingement against the product as a high-speed collimated air stream. Some used air is then fed back within the cooking zone. Also, some air provides tempering and equilibrium conditioning of the product to achieve the temperature profiles as described above. In addition, an important aspect of the invention is that there is feedback from the equilibrium zone to the tempering zone. This is described in more detail below.

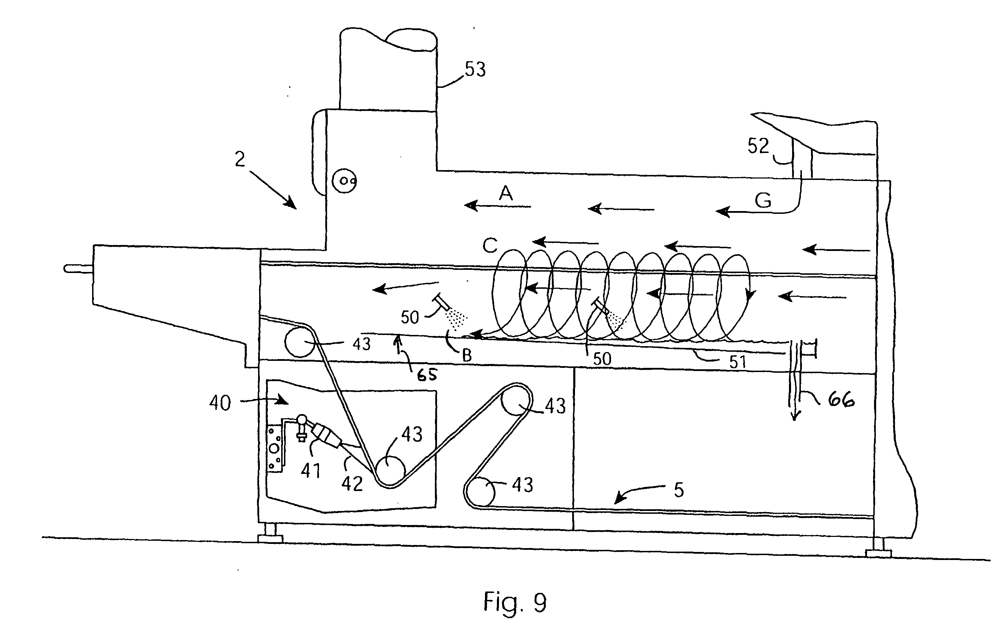

Referring to Fig. 9, the tempering zone 2 is described in more detail. The tempering zone 2 comprises a washing apparatus 40 comprising a series of tensioning rollers 43. As the conveyor 5 passes over one of these rollers, it is washed comprehensively because of a high-speed hot water jet 42 delivered from a nozzle 41 which has a sweeping movement across the width of the belt. It has been found that comprehensive cleaning is achieved because of impingement of the hot water against the direction of travel and as the belt traverses the roller 43. It is also important that this is achieved immediately before raw food is placed on to the belt.

The tempering zone 2 also comprises a series of steam nozzles 50 which are directed in the direction of conveying and downwardly beneath the belt 5 and over a drip tray 51. Thus, as shown in the drawings, there is a contra flow of used hot air A from the cooking zone 3 which meets the steam B to form a swirling turbulent air/steam mixture C which is directed upwardly in a swirling motion against the food product to provide comprehensive tempering at an early stage.

As shown in Fig. 5, steam may also be introduced in the cooking zone 3 immediately upstream of the fan 22 so that it is mixed with the air at the desired proportion for direct cooking. This provides excellent air assisted steam control.

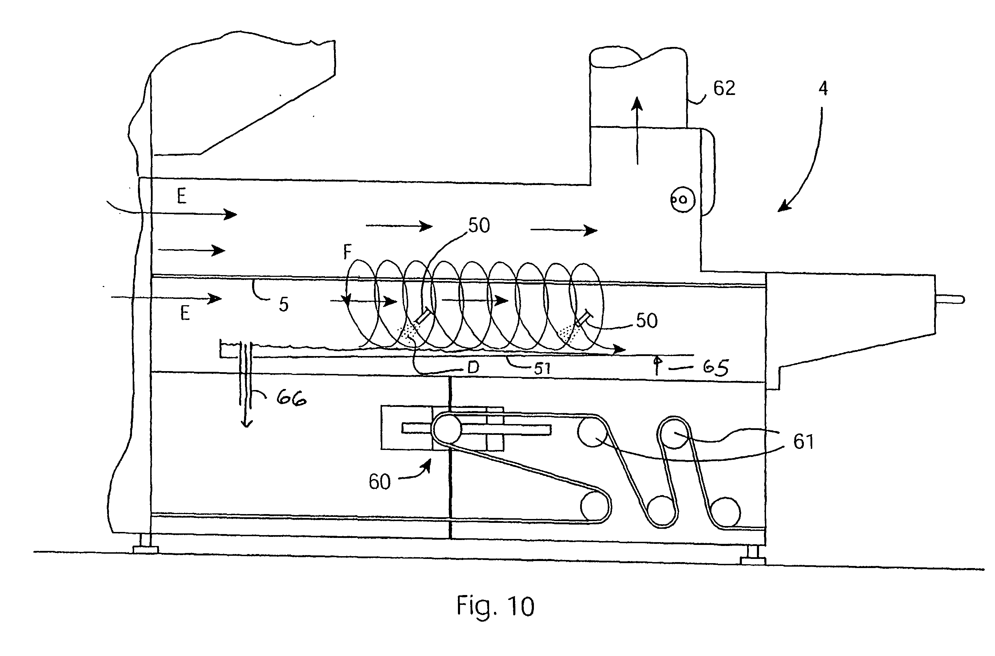

Referring to Fig. 10, the equilibrium zone 4 is illustrated in more detail. Again, there are steam nozzles 50 which direct steam downwardly and in this case against the conveying direction and over a drip tray 31. However, the steam direction D is against the direction of laminar air flow E from the cooking zone to cause turbulent steam/air mixture F directed upwardly against and around the food products for comprehensive conditioning.

The steam is injected at the various zones according to the desired proportions so that the system may be used for a complete dry cook, a wet cook, or a dry/wet combination.

The equilibrium zone 4 also comprises a conveyor belt pneumatic tensioning system 60 which is downstream of a series of tensioning rollers 61. This zone also comprises an exhaust outlet 62 which takes the hot air exhaust which comprises the laminar flow E together with some air drawn in from the exit. While the temperature of the laminar flow E may be approximately 250°C this is reduced to approximately 200°C to 220°C by air drawn from the tunnel exit and it is this which is fed back into the tempering zone. The feedback is driven by a fan in a generally horizontal conduit between the equilibrium and tempering zones. This feedback is indicated by the arrow G and it increases flow rate of the contra flow A in the tempering zone by approximately 100% as it matches the flow directly from the cooking zone. Also, it dramatically increases the temperature in the tempering zone so that there is a much more significant increase in product temperature within the tempering zone. Indeed, an improvement of air temperature from 90°C to 150°C has been achieved with resulting increase in the upper temperature limit of the product as it exits the tempering zone from 15°C to 28°C, for example. This improvement helps to reduce the cycle time. For example, it has been found that for a 4oz burger food product, the cooking time has been reduced from approximately 6 minutes to approximately 4 minutes. This has been achieved without additional energy input. This is extremely important in the food production industry.

As shown in Figs. 9 and 10, each drip tray 51 is slanted downwardly towards the cooking zone. Also, there is a water supply hose 65 which delivers a water flow rate of c.2 l/min at a temperature greater than 45°. A drain tube 66 extends from each tray 51 at the lower end. The upper end of the drain tube 66 forms a weir about 25mm high. The drain tube 66 is connected at its lower end to a waste tank.

In operation, fat drops off the food products and into the trays 51. There is a water level (provided by the supply 65) of up to 25mm and the fat floats on this. The supply 65 provides a constant flow of fat and water (c_10% fat, 90% water) over the weir and into the drain tube 66. Because the water supply temperature is at least 45°C and because of the hot air flows, there is a vapourising effect which enhances the cooking cycle by helping to retain the natural moisture in the food product. This significantly increases food product yields. Also, the tray 51 of course removes fat from the system and reduces risk of fire.

There is a drip tray 51 in each zone, the one in the cooking zone having apertures to receive the plenum tubes 24 protruding upwardly through it. However, there may be a drip tray in only one or any number of zones.

It will be appreciated that the invention provides a multi-functional cooking system which allows for cooking of a very wide range of food products with either dry cooking, wet cooking, or a combination. This has been achieved by use of air-assisted steam. Because the steam is air-assisted, very low pressure, in the order of 1.2 bar is sufficient to provide the necessary cooking effect. This is very important as it is much less expensive to provide steam at this temperature than at the typical industry-wide pressure of 3-5 bar. The invention also achieves improved yields, shorter cooking cycles. and improved efficiency.

The invention is not limited to the embodiments described but may be varied in construction and detail within the scope of the claims.

## Claims

1. A continuous cooking system comprising:-
a conveyor (5), and drive means for moving the conveyor through a tunnel, the tunnel comprising:-
a tempering zone (2) through which air flows against the conveying direction in a contra flow, a cooking zone (3) comprising an air heater and fan means for pumping hot air against food products and pumping used air rearwardly into the tempering zone and forwardly out of the cooking zone, and an equilibrium zone downstream (4) of the cooking zone in which used air flows in the same direction as the conveying direction and is drawn out at an exhaust, **characterised in that**,
the exhaust (62) of the equilibrium zone is connected to an auxiliary air inlet (52) of the tempering zone to feed back hot air and to increase the contra flow flowrate and temperature in the tempering zone.

2. A system as claimed in claim 1, wherein the feedback flowrate is approximately equal to the contra flow flowrate directly from the cooking zone.

3. A system as claimed in claim 1 or 2, wherein the feedback temperature is in the range of 180° to 250°C.

4. A system as claimed in any preceding claim, wherein the cooking zone comprises means for internally feeding back used air into the air heater.

5. A system as claimed in claim 4, wherein the cooking zone comprises means (25) for drawing inlet air via an upper vent (26) in a cooking zone housing and via a primary inlet of the air heater.

6. A system as claimed in any preceding claim, wherein the cooking zone comprises upper and lower plenums (10(a), 10(b)) above and below the conveyor belt, and a flow controller (15, 16) for regulating proportions of hot air to the plenums.

7. A system as claimed in claim 6, wherein the plenums comprise air-directing tubes (24) arranged in an offset configuration with respect to the conveying direction whereby cooking is not load-related.

8. A system as claimed in any preceding claim, wherein the system comprises means for injecting steam (23) into the cooking zone for air-assisted steam flow against food products.

9. A system as claimed in claim 8, wherein the tempering and equilibrium zones each comprise means (50) for injecting steam against hot air flow to cause turbulent air and steam admixture.

10. A system as claimed in claim 9, wherein said means comprises steam nozzles (50) directed downwardly beneath the conveyor and above a drip tray.

11. A system as claimed in claims 9 or 10, wherein the steam pressure is in the range 1.1 to 2.5 bar.

12. A system as claimed in any preceding claim, wherein the system further comprises a belt wash system (40) in the tempering zone, the belt wash system comprising means for directing pressurised water at the belt at a roller in sweeping movements across the width of the belt.

13. A system as claimed in any preceding claim, wherein the cooking zone comprises means for adjusting vertical position of the plenums.

14. A system as claimed in any preceding claim, wherein the system comprises a fat removal system in at least one zone, said fat removal system comprising a drip tray having a weir drain and a hot water supply, whereby fat floats on the water and flows out the weir drain.

## Patentansprüche

1. Dauerkochsystem, umfassend:
ein Förderband (5) und Antriebsmittel zum Bewegen des Förderbands durch einen Tunnel, wobei der Tunnel aufweist:
eine Temperierzone (2), durch die Luft gegen die Förderrichtung in einem Gegenfluss strömt, eine Kochzone (3), die einen Lufterhitzer und ein Gebläsemittel zum Pumpen heißer Luft gegen Nahrungsmittelprodukte und Pumpen verbrauchter Luft nach hinten in die Temperierzone und nach vorne aus der Kochzone heraus aufweist, und eine Gleichgewichtszone (4) stromabwärts der Kochzone, in der verbrauchte Luft in der selben Richtung wie der Förderrichtung strömt und an einer Entlüftung abgesaugt wird, **dadurch gekennzeichnet, dass**
die Entlüftung (62) der Gleichgewichtszone an einen zusätzlichen Lufteinlass (52) der Temperierzone angeschlossen ist, um heiße Luft zurückzuführen und die Gegenfluss-Strömungsgeschwindigkeit und die Temperatur in der Temperierzone zu vergrößern.

2. System nach Anspruch 1, bei dem die Rückführ-Strömungsgeschwindigkeit ungefähr gleich der Gegenfluss-Strömungsgeschwindigkeit direkt von der Kochzone ist.

3. System nach Anspruch 1 oder 2, bei dem die Rückführtemperatur im Bereich von 180° bis 250°C liegt.

4. System nach einem vorhergehenden Anspruch, bei dem die Kochzone Mittel zum internen Rückführen verbrauchter Luft in den Lufterhitzer aufweist.

5. System nach Anspruch 4, bei dem die Kochzone Mittel (25) zum Saugen von Einlassluft über eine obere Lüftung (26) in ein Kochzonengehäuse und über einen primären Einlass des Lufterhitzers aufweist.

6. System nach einem vorhergehenden Anspruch, bei dem die Kochzone eine obere und untere Luftkammer (10(a), 10(b) über und unter dem Förderband und eine Strömungssteuerung (15, 16) zum Regeln der Anteile heißer Luft zu den Luftkammern aufweist.

7. System nach Anspruch 6, bei dem die Luftkammern Luftleitrohre (24) aufweisen, die in einer versetzten Konfiguration in bezug zu der Förderrichtung angeordnet sind, wodurch Kochen nicht lastbezogen ist.

8. System nach einem vorhergehenden Anspruch, wobei das System Mittel zum Einspritzen von Dampf (23) in die Kochzone für luftunterstützte Dampfströmung gegen Nahrungsmittelprodukte aufweist.

9. System nach Anspruch 8, bei dem die Temperier- und Gleichgewichtszone jeweils Mittel (50) zum Einspritzen von Dampf gegen die Strömung heißer Luft aufweisen, um Luftverwirbelung und Dampfbeimischung zu verursachen.

10. System nach Anspruch 9, bei dem das genannte Mittel Dampfdüsen (50) aufweist, die nach unten unter die Fördereinrichtung und über ein Abtropfblech gerichtet sind.

11. System nach Anspruch 9 oder 10, bei dem der Dampfdruck im Bereich von 1,1 bis 2,5 bar liegt.

12. System nach einem vorhergehenden Anspruch, wobei das System ferner ein Bandwaschsystem (40) in der Temperierzone aufweist, wobei das Bandwaschsystem Mittel zum Richten von Druckwasser auf das Band an einer Rolle in überstreichenden Bewegungen über die Breite des Bands aufweist.

13. System nach einem vorhergehenden Anspruch, bei dem die Kochzone Mittel zum Einstellen der vertikalen Position der Lufträume aufweist.

14. System nach einem vorhergehenden Anspruch, wobei das System ein Fettentfernungssystem in mindestens einer Zone aufweist, und das genannte Fettentfernungssystem ein Abtropfblech mit einem Überlaufabfluss und einer Warmwasserversorgung aufweist, wodurch Fett auf dem Wasser schwimmt und aus dem Überlaufabfluss herausfließt.

## Revendications

1. Un système de cuisson continu comprenant :
un convoyeur (5) et un moyen d'entraînement pour déplacer le convoyeur à travers un tunnel,
le tunnel comprenant :
une zone de mise en température (2) à travers laquelle de l'air circule contre le sens de convoyage en contre-courant, une zone de cuisson (3) compreant un réchauffeur d'air et un moyen de ventilateur pour faire circuler de l'air chaud contre des produits alimentaires et pour faire circuler l'air usé vers l'arrière dans la zone de mise en température et vers l'avant hors de la zone de cuisson, et une zone d'équilibre en aval (4) de la zone de cuisson dans laquelle l'air usé circule dans le même sens que le sens de convoyage, et est aspiré vers l'extérieur à un extracteur, **caractérisé en ce que**,
l'extracteur (62) de la zone d'équilibre est raccordé à une admission d'air auxiliaire (52) de la zone de mise en température pour renvoyer l'air chaud et pour augmenter le débit du contre-courant et la température dans la zone de mise en température.

2. Un système selon la revendication 1, où le débit de retour est approximativement égal au débit du contre-courant venant directement de la zone de cuisson.

3. Un système selon la revendication 1 ou 2, où la température de retour est comprise dans la plage 180° à 250°C.

4. Un système selon l'une quelconque des revendications précédentes, où la zone de cuisson comprend un moyen de renvoyer intérieurement l'air usé dans le réchauffeur d'air.

5. Un système selon la revendication 4, où la zone de cuisson comprend un moyen (25) pour aspirer l'air d'admission par un évent supérieur (26) dans un logement de zone de cuisson et par une admission primaire du réchauffeur d'air.

6. Un système selon l'une quelconque des revendications précédentes, où la zone de cuisson comprend des plénums supérieur et inférieur (10(a), 10(b)) au-dessus et au-dessous de la courroie du convoyeur, et un régulateur de débit (15, 16) pour réguler des proportions d'air chaud vers les plénums.

7. Un système selon la revendication 6, où les plénums comprennent des tubes dirigeant l'air (24) agencés dans une configuration décalée par rapport au sens de convoyage grâce à quoi la cuisson n'est pas liée à la charge.

8. Un système selon l'une quelconque des revendications précédentes, où le système comprend un moyen d'injecter de la vapeur (23) dans la zone de cuisson pour un débit de vapeur assisté par air contre les produits alimentaires.

9. Un système selon la revendication 8, où les zones de mise en température et d'équilibre comprennent chacune un moyen (50) d'injecter de la vapeur contre le débit d'air chaud pour faire mélanger l'air turbulent et la vapeur.

10. Un système selon la revendication 9, où ledit moyen comprend des buses de vapeur (50) dirigées vers le bas au-dessous du convoyeur et au-dessus d'un bac d'égouttage.

11. Un système selon la revendication 9 ou 10, où la pression de la vapeur est comprise dans la plage 1,1 à 2,5 bar.

12. Un système selon l'une quelconque des revendications précédentes, où le système comprend en plus un système de lavage de courroie (40) dans la zone de mise en température, le système de lavage de courroie comprenant un moyen pour diriger l'eau pressurisée vers la courroie à un rouleau en mouvements de balayage en travers de la largeur de la courroie.

13. Un système selon l'une quelconque des revendications précédentes, où la zone de cuisson comprend un moyen d'ajuster la position verticale des plénums.

14. Un système selon l'une quelconque des revendications précédentes, où le système comprend un système d'extraction de la graisse dans au moins une zone, ledit système d'extraction de la graisse comprenant un bac d'égouttement ayant un déversoir et une alimentation en eau chaude, grâce à quoi la graisse flotte sur l'eau et s'écoule par l'évacuation du déversoir.
